# EUROPÄISCHE PATENTSCHRIFT

(11) **EP 0 825 666 B1**
(45) Veröffentlichungstag und Bekanntmachung des Hinweises auf die Patenterteilung: **10.09.2003**
(21) Anmeldenummer: 97113715.3
(22) Anmeldetag: 08.08.1997
(51) Int. Cl.: H01Q 1/12

(54) **Fensterscheibenantenne mit einer transparenten leitfähigen Schicht**
Window pane antenne with a transparent conductive layer
Antenne de vitre avec une couche transparente conductive

(30) Priorität: 16.08.1996 DE 19633100
(43) Veröffentlichungstag der Anmeldung: 25.02.1998
(73) Patentinhaber: FUBA Automotive GmbH & Co. KG, 31162 Bad Salzdetfurth (DE)
(72) Erfinder: Lindenmeier, Heinz, 82152 Planegg (DE); Hopf, Jochen, 85540 Haar (DE); Reiter, Leopold, 82205 Gilching (DE)

(56) Entgegenhaltungen:
- US-A- 4 768 037
- US-A- 4 823 140
- US-A- 4 849 766
- US-A- 5 083 135

## Beschreibung

Die Erfindung betrifft eine Fensterscheibenantenne, deren Hauptelement durch eine für Licht transparente jedoch wärmetransmissionsmindemde und in einem Bereich der Fensterscheibe flächig aufgebrachte dünne elektrisch leitfähige Schicht gebildet ist. Die so gebildete leitende Fläche ist an dem Fensterglas befestigt. Hierbei ist die Schicht entweder auf das Fensterglas direkt aufgetragen oder zwischen zwei Glasschichten, welche eine Verbundglasscheibe bilden, eingebettet. Als Träger der leitenden Schicht kann eine dünne Folie dienen, welche zwischen die Glastafeln der Verbundglasscheibe eingebettet wird. Um eine derartige Schicht als Hauptelement einer Antenne zu verwenden, ist es wünschenswert, Schichten mit möglichst kleinem Oberflächenwiderstand zu verwenden. Je niedriger der Oberflächenwiderstand der aus extrem dünnen Metall- und Metalloxydschichten gestalteten leitenden Flächen ist, umso größer ist die lichtabsorbierende Wirkung im sichtbaren Bereich. Leitfähige Schichten mit hinreichend großer Transparenz können jedoch kaum mit einem Oberflächenwiderstand von weniger als 5 Ohm realisiert werden. Vergleicht man diesen Oberflächenwiderstand mit dem hochleitfähiger Materialien, wie z.B. Kupfer oder Silber, so sind letztere im Bereich von 0,25 Milliohm und somit um viele Größenordnungen kleiner.
Antennen dieser Art werden vorzugsweise in Kraftfahrzeugen verwendet. Insbesondere in Frontscheiben ist es notwendig, die Transparenz durch die leitende Schicht nicht zu sehr einzuschränken. Aus diesem Grund kann die leitende Schicht bezüglich ihres Oberflächenwiderstands nicht niederohmiger als 5 Ohm gewählt werden. Antennen dieser Art werden vorzugsweise als Rundfunkempfangsantennen in den Frequenzbereichen von LMKU, VHF und UHF verwendet.

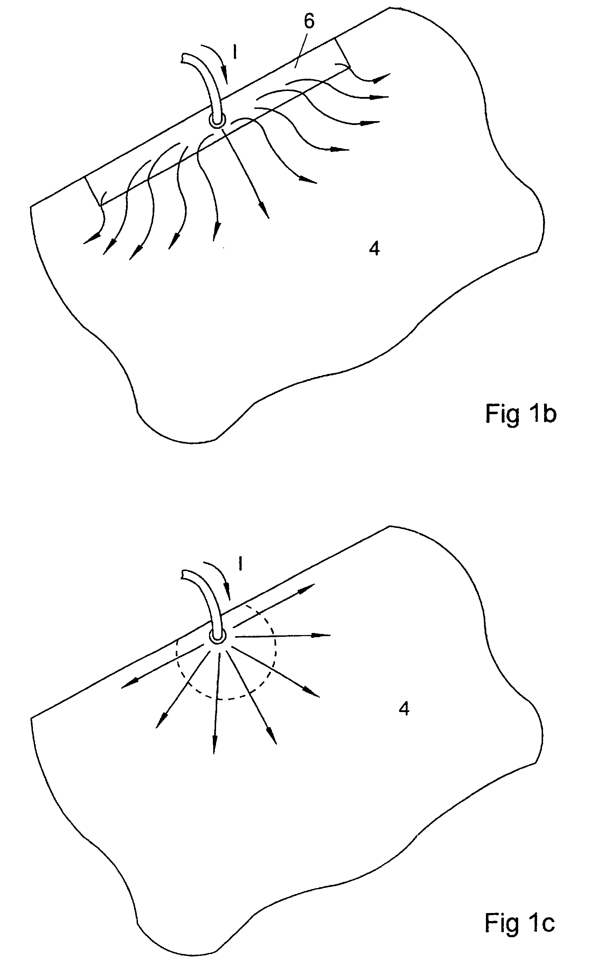

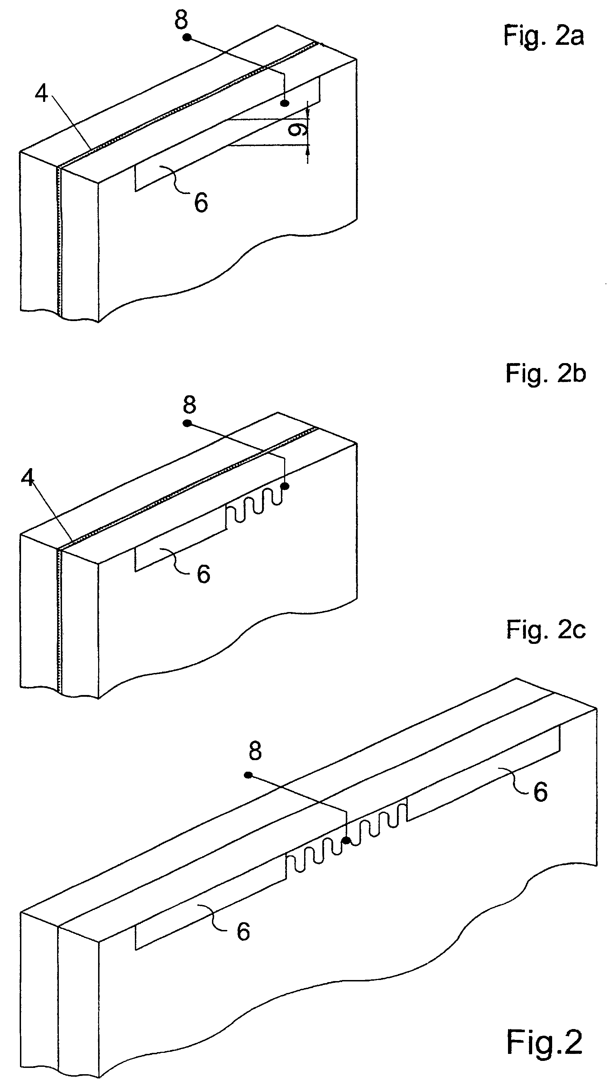

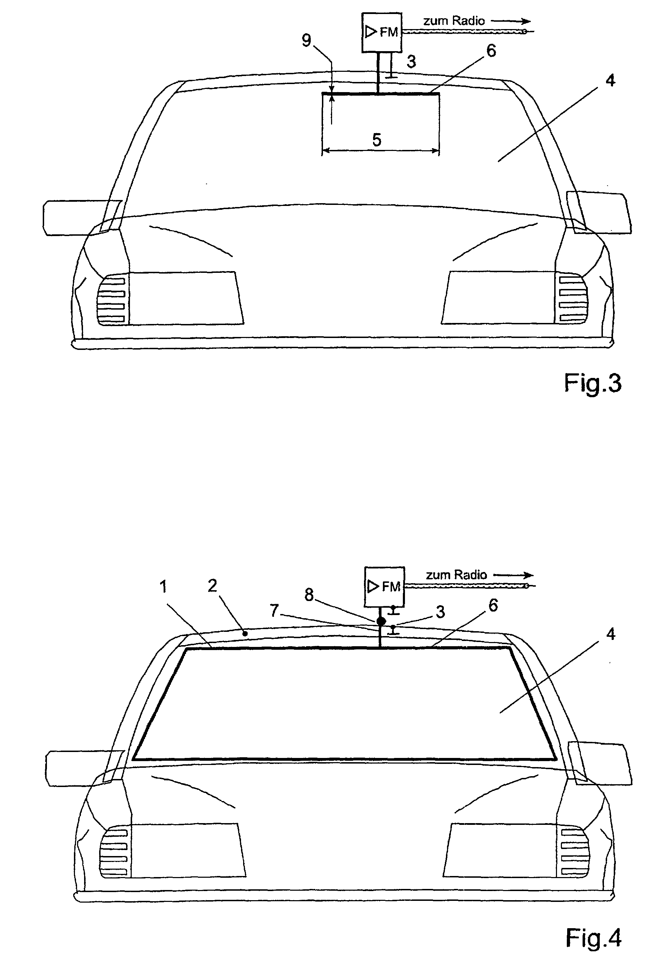

In der Vergangenheit wurde z.B. in der DE 3721934 A1 eine Antenne beschrieben, welche eine verhältnismäßig niederohmig leitende Schicht verwendete. Gestaltet man Antennen nach diesem Stand der Technik jedoch mit hochohmigeren Schichten zugunsten der Transparenz, so ergeben sich relativ hohe Antennenverluste, welche in einer vergleichsweise geringen Antennenleistung resultieren. Insbesondere in dem Meter- und Dezimeterwellenbereich wirken sich die Antennenverluste stark nachteilig aus. In US 4,768,037 ist ein transparenter und leitfähiger Film beschrieben, welcher auf einer Glasscheibe aufgebracht ist. Hierbei wird zur Bildung einer Antenne eine in ihrer Breite undefinierte streifenförmige "feeding bar" aus hoch leitfähigem Material vorgeschlagen, welche zur Vermeidung von Verlusten galvanisch, d.h. berührend mit dem leitfähigen Film kontaktiert ist. In Fig. 2 der US 4,768,037 ist die leitfähige Schicht auf der dem Innenraum eines Kraftfahrzeugs zugewandten Seite einer Fensterscheibe aufgebracht. Um die damit verbundene Verletzlichkeit einer derartigen Schicht zu vermeiden, wird diese deshalb bevorzugt auf einer der Innenflächen eines laminierten Glases, wie in Fig. 3 der Schrift gezeigt, aufgebracht. Bei Gestaltung einer Antenne nach der US 4,768,037 ist jedoch damit der Nachteil der aufwendigen Herausführung des Anschlusses aus dem Glasverbund gegeben. Diese Herausführung ist auch durch die notwendige und kostenaufwendige Versiegelung gegen hochfrequent dämpfende Nachbarschaftseffekte - bewirkt durch den Scheibenkleber bzw. die Fensterumrahmung aus Gummi oder Plastik - nachteilig. Weiterhin besteht die Gefahr der Beschädigung und Durchtrennung der nur einige Nanometer dünnen begrenzt leitenden Schicht infolge der Beilage einer metallischen Folie als "feeding bar" wie in Fig.4 in derem Randbereich.

Aufgabe der Erfindung ist es deshalb, für Antennen nach dem Oberbegriff des Anspruchs 1 die durch die begrenzte Leitfähigkeit der gebildeten Fläche gegebenen Eigenschaften auf besonders einfache und damit kostengünstige Weise zur Bildung einer Antenne auszunutzen, das ist den Leistungsverlust weitgehend zu vermeiden und ggfs. die Gestaltung voneinander teilweise entkoppelter Einzelantennen auf einfache Weise zu ermöglichen.

Diese Aufgabe wird durch den kennzeichnenden Teil des Anspruchs 1 bzw. den kennzeichnenden Teil des Anspruchs 19 gelöst.

Eine Antenne nach dem Stande der Technik gemäß DE 3721934 A1 besitzt als Anschluß an die aus der leitenden Schicht gestaltete begrenzt leitfähige Fläche punktförmige Kontakte. Diese sind in dieser Schrift in den Figuren 3 und 6 dargestellt. Dadurch ergeben sich im Bereich dieser Kontakte hohe Dichten der Antennenströme, welche auf der begrenzt leitfähigen Fläche den wesentlichen Beitrag zu den Antennenverlusten liefern. Eine Antenne nach der US 4,768,037 kann diesen Nachteil nur mit Hilfe der galvanischen Kontaktierung der "feeding bar" vermeiden, welche mit den Nachteil der komplizierten galvanischen Herausführung aus dem Glasverbund verbunden ist.

Eine Antenne nach der Erfindung vermeidet alle genannten Nachteile der nach dem Stande der Technik bekannten Antennen dieser Art.

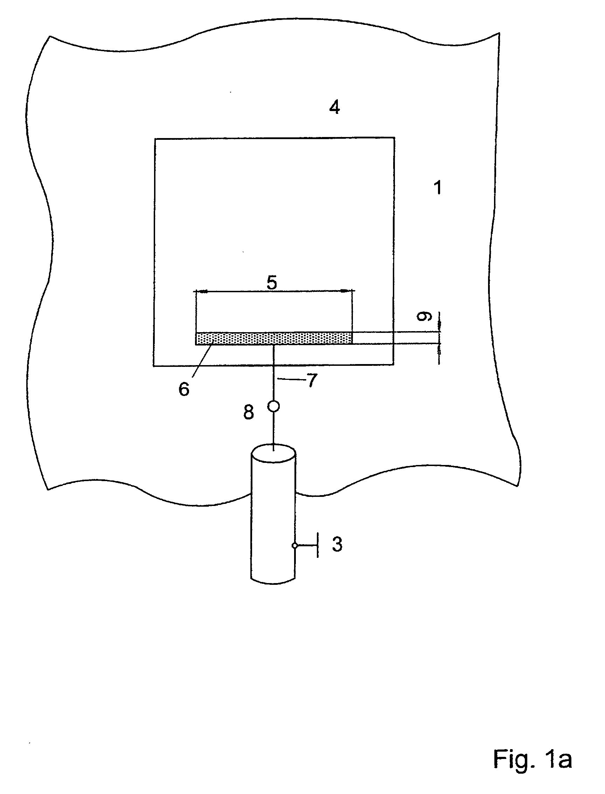

Die Erfindung wird nachfolgend anhand der Zeichnungen beispielsweise näher erläutert; in dieser zeigt
Fig. 1: Erläuterung der Wirkungsweise einer kapazitiv mit der begrenzt leitenden Fläche 4 verbundenen Elektrode aus hochleitfähigem Material
   a) Antenne nach der Erfindung mit begrenzt leitfähiger Fläche 4 auf einer Fensterscheibe 1 mit langgestreckter flächiger Elektrode aus hochleitfähigem Material mit Elektrodenlänge 5 und Elektrodenbreite 9, Antennenanschlußpunkt 8 und Massepunkt 3.
   b) Wirkungsweise einer Elektrode 6 nach der Erfindung mit angedeuteten verteilten Stromlinien in der begrenzt leitenden Fläche 4 zur Vermeidung von Stromkonzentrationen.
   c) Begrenzt leitfähige Fläche 4 mit punktförmiger Kontaktierung und angedeuteter Stromlinienkonzentration in der Nähe des punktförmigen Kontakts mit gestrichelt angedeutetem Bereich mit besonders hohem Verlustbeitrag.
Fig. 2:
   a) Verbundglasscheibe mit eingebetteter begrenzt leitender Fläche 4 mit kapazitiv angekoppelter Elektrode 6 nach der Erfindung auf einer der äußeren Glasflächen und Antennenanschlußpunkt 8.
   b) Elektrode 6 wie in Fig. a jedoch mit mäanderförmig gestalteter Induktivität 11 zur teilweisen Kompensation des kapazitiven Widerstandes in einem begrenzten Empfangsfrequenzbereich.
   c) Elektrode mit kapazitiver Ankopplung nach der Erfindung wie in b) mit Induktivitäten und frei wählbarer Positionierung des Antennenanschlußpunktes auf der Elektrode.
Fig. 3:
   Fahrzeugantenne in der Frontfensterscheibe mit streifenförmiger Elektrode 6 mit kapazitiver Ankopplung nach der Erfindung, mit der Elektrodenlänge 5 und der Elektrodenbreite 9.
Fig. 4:
   Antenne in der Frontfensterscheibe eines Kraftfahrzeugs mit streifenförmiger Elektrode 6 mit kapazitiver Ankopplung nach der Erfindung als Rahmen um die gesamte Fensteröffnung.
Fig. 5:
   Hörrundfunkempfangsantenne mit Antennendiversity mit drei voneinander getrennten Antennen nach der Erfindung für UKW-Diversity. Die gestrichelten Linien zeigen die Hauptwirkungsbereiche der einzelnen Antennen.
Fig. 6:
   Verbundglasscheibe mit eingebetteter begrenzt leitender Fläche 4 und beigelegter zusätzlicher Elektrode 6a, welche
   a) kapazitiv über eine dünne Kunststoffolie 11 angekoppelt bzw.
   b) galvanisch angekoppelt ist;
   mit einer zusätzlichen Elektrode 6a auf einer der äußeren Flächen des Glases gegenüberliegenden leitenden Fläche zur Bildung einer Elektrode 6, bestehend aus einer im wesentlichen zur zusätzlichen Elektrode 6a formgleichen leitenden Fläche.

Im Gegensatz zum Stande der Technik wird in Fig. 1a) eine flächenhaft ausgestaltete Elektrode 6 aus hoch leitfähigem Material und langer Berandung verwendet, wobei längs der Berandung ein kapazitiver hochfrequenzmäßiger Kontakt mit der begrenzt leitenden Fläche 4 besteht. Dadurch werden Stromkonzentrationen vermieden. Dies geht aus Fig. 1b) hervor, wo die angedeuteten Stromverläufe zeigen, daß der über den Anschluß an die Elektrode 6 zufließende Gesamtstrom I sich über die hochleitfähige Elektrode 6 über den kapazitiv gebildeten Kontakt nahezu gleichmäßig verteilt und unter Vermeidung großer Stromdichten in die begrenzt leitfähige Fläche 4 eingespeist wird. Im Gegensatz hierzu zeigt ein punktförmiger Anschluß wie in Fig . 1a große Stromdichten in der Umgebung des punktförmigen Anschlusses, wodurch ein hoher Verlustbeitrag aus dem Nahbereich des Anschlusses (gestrichelte Linie) erfolgt.

Der Vorteil einer flächenhaft ausgestalteten Elektrode 6 aus hoch leitfähigem Material zur Bildung eines kapazitiven Kontakts mit der begrenzt leitenden Fläche 4 gegenüber einer galvanisch kontaktierten "feeding bar" gemäß der US 4,768,037 besteht auch in der günstigeren Aufteilung des hochfrequenten Stroms im Übergang von der Elektrode 6 auf die auf die begrenzt leitende Fläche 4. Bei der kapazitiven Kontaktierung nach der Erfindung werden hohe Stromdichten infolge der durch Länge und Breite der Elektrode 6 gegebenen flächenhaften Ausdehnung in der begrenzt leitenden Fläche 4 durch zweidimensionale Stromverteilung vermieden. Bei der in der US 4,768,037 angegebenen "feeding bar" erfolgt der Stromübergang eindimensional längs der Randlinie der "feeding bar", wodurch die Güte der Ankopplung von der Homogenität und der Unversehrtheit der empfindlichen begrenzt leitfähigen Schicht längs dieser Linie abhängt.

In praktischen Untersuchungen wurde bestätigt, daß z.B. bei der Gestaltung einer UKW-Antenne, wie sie in Fig. 3 dargestellt ist, eine optimale Länge 5 der Elektrode 6 von ca. 30 cm ergibt. Die Ankopplung an die begrenzt leitende Fläche 4 erfolgt erfindungsgemäß kapazitiv z.B. dadurch, daß diese Fläche zwischen die Scheiben eines Verbundglases eingebettet ist und eine streifenförmig ausgebildete Elektrode 6 auf der Auto-Innenseite des Verbundglases aufgedruckt und an diese Fläche angekoppelt ist. Dies wird anhand von Fig. 2 näher erläutert. In Fig. 2a ist eine Verbundglasscheibe mit eingebetteter begrenzt leitender Fläche 4 mit kapazitiv angekoppelter Elektrode 6 nach der Erfindung auf einer der äußeren Glasflächen und Antennenanschlußpunkt 8 dargestellt. Die Kapazität ist, wie aus der Figur 2a hervorgeht, zwischen der auf der äußeren Glasfläche aufgebrachten flächenhaft ausgestalteten Elektrode 6 und der begrenzt leitenden Fläche 4 im Inneren des Glasverbunds mit Glas als Dielektrikum gebildet. Zwischen dem Antennenanschlußpunkt (8) und der begrenzt leitenden Fläche 4 besteht demnach ein kapazitiver Widerstand, welcher sich bei einer bestimmten Frequenz zwischen der flächenhaft ausgestalteten Elektrode 6 gemäß deren Fläche und der Fläche 4 - mit Glas als dazwischen liegendem Dielektrikum - ergibt. Zur teilweisen Kompensation dieses kapazitiven Widerstandes in einem begrenzten Empfangsfrequenzbereich kann erfindungsgemäß eine mäanderförmig gestaltete Induktivität 11 in der in Fig. 2b dargestellten Serienschaltung auf die äußere Glasfläche aufgebracht werden. Auf ähnliche Weise einer kompensierten kapazitiven Ankopplung kann erfindungsgemäß der Antennenanschlußpunkt 8, wie in Fig. 2c dargestellt, z.B. auch mittig im Bereich der Elektrode 6 positioniert sein.

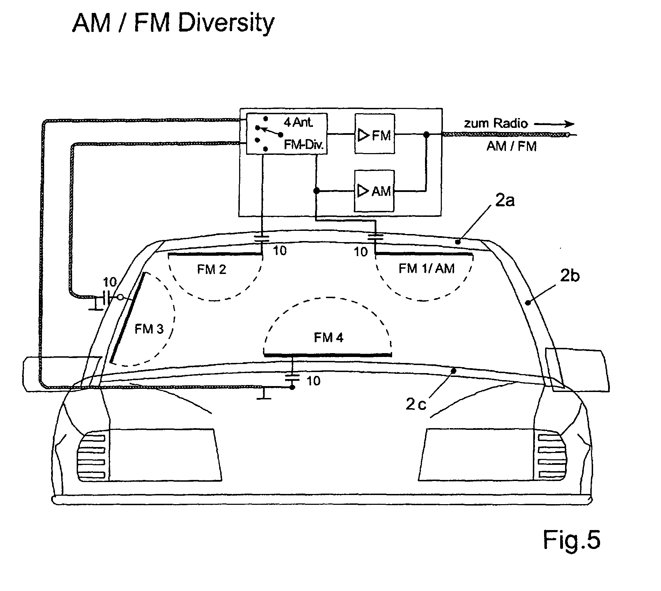

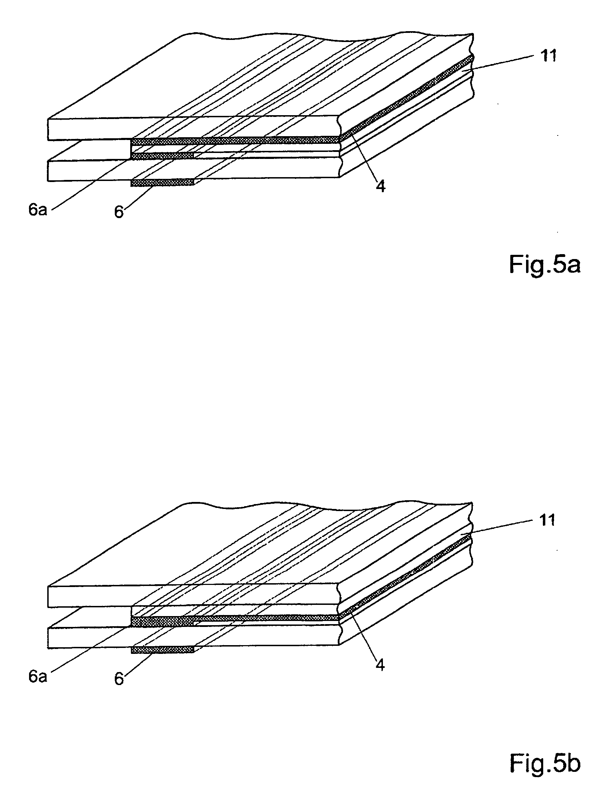

Bei einer Anordnung der Elektrode 6 gemäß Fig. 2 auf einer der äußeren Flächen einer Verbundglasfensterscheibe mit kapazitiver Ankopplung an die begrenzt leitende Fläche 4 lassen sich die verbleibenden Ankoppelverluste in einer weiteren vorteilhaften Ausgestaltung der Erfindung weiter reduzieren, wenn eine zusätzliche Elektrode 6a eingeführt wird. Diese wird dem Glasverbund beigelegt bzw. auf einer der Elektrode 6 gegenüberliegenden inneren Fläche des Glases zur Bildung einer Kapazität angebracht. Vorteilhafterweise wird die zusätzliche Elektrode 6a als eine zu den Umrissen der Elektrode 6 im wesentlichen formgleiche leitende Fläche ausgebildet. Hierbei kann, wie in Fig. 6a gezeigt, eine dünne Kunststoffolie 12 zwischen der zusätzlichen Elektrode 6a und der begrenzt leitfähigen Fläche 4 vorhanden sein, wobei diese die wirksame Kapazität zwischen der zusätzlichen Elektrode 6a und der Elektrode 6 nicht nennenswert verkleinern sollte. Besonders vorteilhaft ist es deshalb, wenn die zusätzliche Elektrode 6a eine extrem dünne Metallschicht ist und unmittelbar auf der begrenzt leitfähigen Fläche aufliegt, so daß wie in Fig.5 ein galvanischer Kontakt besteht.

Bei der Gestaltung von Kraftfahrzeugantennen ist stets darauf zu achten, daß aus ästhetischen Gründen Elektroden durch den am Scheibenrand üblicherweise befindlichen Schwarzdruck abgedeckt sein müssen. Somit ist die begrenzt leitfähige Fläche so zu gestalten, daß sie den gesamten Sichtbereich überdeckt, innerhalb des Schwarzdrucks endet und dort mit der Elektrode kontaktiert ist. Für die gesamte Antennenfunktion ist es wünschenswert, den Abstand zwischen dem Rand der leitfähigen Fläche 4 und dem leitenden Fensterrahmen 2 möglichst groß zu gestalten. Aufgrund der begrenzten Breite des Schwarzdrucks wird deshalb die Elektrodenbreite 9 so groß wie elektrisch zur Ankopplung an die begrenzt leitende Fläche 4 notwendig, jedoch nicht größer, um einen möglichst großen Abstand zum leitenden Fensterrahmen 2 einzuhalten. Eine Antenne wie in Fig. 3 kann ebenfalls als LMK-Antenne verwendet werden, sofern die begrenzt leitfähige Fläche 4 an keinem Punkt mit dem leitenden Fensterrahmen 2 galvanisch oder kapazitiv zu niederohmig verbunden ist. Somit läßt sich eine zusammenhängende begrenzt leitende Fläche 4 mit einer Ankopplung mit Hilfe einer Elektrode 6 nach der Erfindung auch als eine LMKU-Antenne ausgestalten. Ebenso ist die gleichzeitige Verwendung für TV-Rundfunkempfang möglich.

In einer besonders vorteilhaften Ausgestaltung der Erfindung kann zur Vermeidung von besonders hohen Verlusten insbesondere bei Verwendung hochohmigerer Schichten als begrenzt leitfähige Fläche 4 die flächig ausgeführte Elektrode 6 als Rahmen ausgebildet werden.

Die begrenzte Leitfähigkeit der Schicht kann vorteilhafterweise zur Gestaltung voneinander teilweise entkoppelter Einzelantennen ausgenützt werden. Hierzu werden wie in Fig. 5, voneinander getrennte Antennen gebildet, deren hauptsächliches Wirkungsfeld jeweils als gestrichelter Bereich veranschaulicht wird. Die Elektroden 6 besitzen jeweils für UKW-Anwendung eine Länge von ca. 30 cm. Die Diversitywirkung ergibt sich durch Verteilung der Elektroden 6 auf dem Umfang des leitenden Fensterrahmens 2. Hierbei zeigt sich, daß eine Auskopplung in der Nähe des unteren Horizontalteils 2c des Fensterrahmens vertikale elektrische Feldkomponenten bevorzugt auswertet. Antennen in der Nähe des oberen Horizontalteils 2a und in der Nähe der vertikalen Holme 2b nehmen bevorzugt horizontale elektrische Feldkomponenten auf, besitzen jedoch unterschiedliche Richtdiagramme. Mit einem Antennensystem wie in Fig. 5 läßt sich somit eine effektive Diversity-Empfangsanlage gestalten. Die Auskopplung von LMK-Signalen kann an einer der Antennen erfolgen. Hierbei ist es jedoch notwendig, die im LMK-Bereich wirksame Belastung durch Beschaltung der zusammenhängenden begrenzt leitfähigen Fläche 4 mit den UKW-Anschlüssen des Diversitysystems möglichst klein zu halten. Dies geschieht durch die in Fig. 5 eingetragenen Kapazitäten 10, deren Kapazitätswert groß genug gewählt werden muß, um für die höhere Frequenz einen hinreichend kleinen Blindwiderstand zu bieten, die jedoch andererseits in der Summe die im LMK-Frequenzbereich kapazitiv wirkende Fläche 4 belasten und das LMK-Signal (=AM-Signal) reduzieren. Innerhalb eines begrenzten Frequenzbereichs, wie z.B. des UKW-Bereichs, ist eine teilweise Kompensation des kapazitiven Blindwiderstandes mit Hilfe einer in Serie geschalteten Induktivität möglich, so daß kleinere Kapazitätwerte eingesetzt werden können. Die Induktivität zur teilweisen Kompensation des kapazitiven Blindwiderstandes der Kapazität 10 kann vorteilhafterweise ebenfalls auf die Glasfläche gedruckt werden. Dies kann geschehen, wie es beispielhaft in Fig. 2b) an einem Ende der Elektrode 6 dargestellt ist oder, wie in Fig. 2c), wo die Elektrode 6 an einer geeigneten Anschlußstelle unterteilt ist und die Induktivität in der dargestellten Weise hergestellt ist.

## Patentansprüche

1. Fensterscheibenantenne mit einem Antennenanschlußpunkt (8), deren Hauptelement durch eine für Licht transparente jedoch wärmetransmissionsmindernde und in einem Bereich der Fensterscheibe flächig aufgebrachte begrenzt leitfähige Schicht mit nicht vernachlässigbarem Oberflächenwiderstand gebildet ist und auf der Fensterscheibe eine länglich ausgebildete Elektrode (6) aus hoch leitfähigem Material zum hochfrequenten Anschluß an die durch die Schicht gebildete begrenzt leitende Fläche (4) gebildet ist,
**dadurch gekennzeichnet, daß**
die Elektrode (6) im wesentlichen flächenhaft ausgestaltet und durch ihre Fläche mit der begrenzt leitfähigen Fläche (4) hochfrequent kapazitiv verbunden ist und die Elektrode (6) derart gestaltet ist, daß die Länge der mit der begrenzt leitfähigen Fläche (4) kapazitiv verbundenen Elektrode (6) mindestens so groß gewählt ist, daß der im Bereich von deren Berandung durch den Übergang des Stromes von der Elektrode (6) auf die begrenzt leitfähige Fläche (4) gebildete Verlustbeitrag hinreichend klein ist und die hoch leitfähige Elektrode (6) hochfrequenzmäßig mit dem Antennenanschlußpunkt (8) verbunden ist. (Fig. 1a)

2. Fensterscheibenantenne nach Anspruch 1
**dadurch gekennzeichnet, daß**
die begrenzt leitfähige Fläche (4) und die Elektrode (6)
auf verschiedenen Flächen einer dielektrisch wirksamen Schicht, bestehend aus Kunststoffolien und oder Glas, aufgebracht sind und die Elektrodenbreite (9) zur Herstellung einer hinreichend niederohmigen kapazitiven Verbindung zwischen der begrenzt leitfähigen Fläche (4) und der Elektrode (6) hinreichend groß gewählt ist. (Fig. 2 a, b, c)

3. Fensterscheibenantenne nach Anspruch 1 bis 2
**dadurch gekennzeichnet, daß**
die hochfrequent kapazitiv mit der begrenzt leitfähigen Fläche (4) verbundene Elektrode (6) in der Form eines länglichen Streifens ausgebildet ist und zumindest über einen Teil der Berandung der begrenzt leitfähigen Fläche (4) in der Nähe und längs deren Berandung ausgedehnt ist und die Elektrodenlänge (5) zur Verminderung der Verluste der Elektrode (6) hinreichend groß gewählt ist.

4. Fensterscheibenantenne nach Anspruch 1 bis 3
**dadurch gekennzeichnet, daß**
der spezifische Oberflächenwiderstand der begrenzt leitfähigen Fläche (4) zwischen 3 und 20 Ohm beträgt und diese zusammen mit der Elektrode (6) zwischen die beiden Glasscheiben einer Verbundglasfensterscheibe eingebracht ist und die Elektrode (6) im wesentlichen parallel zum Rand der begrenzt leitfähigen Fläche (4) geführt ist und ein Anschluß zur Elektrode (6) aus dem Glasverbund heraus vorhanden ist und die hochfrequenzmäßige Verbindung der Elektrode (6) zur begrenzt leitfähigen Fläche (4) kapazitiv über eine dem Glasverbund beigelegte dünne Kunststoffolie (11) gegeben ist.

5. Fensterscheibenantenne nach Anspruch 1 bis 4
**dadurch gekennzeichnet, daß**
die begrenzt leitfähige Fläche (4) zwischen die beiden Glasscheiben einer Verbundglasfensterscheibe eingebracht ist und die Elektrode (6) auf einer der beiden äußeren Glasflächen der Verbundglasfensterscheibe angebracht ist und der spezifische Oberflächenwiderstand der begrenzt leitfähigen Fläche (4) zwischen 3 und 20 Ohm beträgt und die Elektrode (6) im wesentlichen parallel zum Rand der begrenzt leitfähigen Fläche (4) geführt ist und die Elektrodenlänge (5) größer als 5cm und die Elektrodenbreite (9) ca. 5-10mm gewählt ist. (Fig. 2 a, b, c)

6. Fensterscheibenantenne nach Anspruch 1 bis 5
**dadurch gekennzeichnet, daß**
die Fensterscheibenantenne auf dem Fenster eines Kraftfahrzeugs angebracht ist und für den Empfang von Rundfunk- und Femsehrundfunksignalen verwendet ist. (Fig. 3)

7. Fensterscheibenantenne nach Anspruch 6
**dadurch gekennzeichnet, daß**
das Kraftfahrzeug eine elektrisch leitende Karosserie besitzt und die begrenzt leitfähige Fläche (4) über den gesamten, durch den Schwarzdruck im Randbereich des Fensters begrenzten Sichtbereich hinausgehend, die Fensterscheibe bedeckt, die streifenförmige Elektrode (6) im wesentlichen parallel zur Sichtkante des Schwarzdrucks und abgedeckt durch denselben geführt ist, die Elektrodenbreite (9) hinreichend groß gewählt ist und der verbleibende Abstand des Randes der begrenzt leitfähigen Fläche(4) zum leitenden Fensterrahmen (2) so groß wie möglich gewählt ist.

8. Fensterscheibenantenne nach Anspruch 1 bis 7
**dadurch gekennzeichnet, daß**
der spezifische Oberflächenwiderstand der begrenzt leitfähigen Fläche (4) zwischen 5 und 10 Ohm beträgt und die Elektrodenlänge (5) für die Erreichung minimaler Verluste im UKW-Frequenzband ca. 20 bis 30 cm gewählt ist. (Fig. 3)

9. Fensterscheibenantenne nach Anspruch 6 bis 7
**dadurch gekennzeichnet, daß**
insbesondere bei hochohmigerem Oberflächenwiderstand der begrenzt leitfähigen Fläche (4) für die Erreichung minimaler Verluste die Elektrode (6) als Rahmen um die gesamte Fensteröffnung ausgebildet ist. (Fig. 4)

10. Fensterscheibenantenne nach Anspruch 6 bis 8
**dadurch gekennzeichnet, daß**
für die Ausbildung mehrerer Antennen für Diversity-Anwendungen im Meter- und Dezimeterwellenbereich mit ein und derselben begrenzt leitfähigen Fläche (4) mehrere voneinander getrennte und am Umfang des leitenden Fensterahmens (2) verteilte Elektroden (6) vorhanden sind mit jeweils einem Antennenanschlußpunkt (8) und einem dazu benachbarten, auf dem leitenden Fensterahmen (2) befindlichen Massepunkt (3). (Fig. 5)

11. Fensterscheibenantenne nach Anspruch 10
**dadurch gekennzeichnet, daß**
die Fensterscheibenantenne auf dem Frontfenster eines Kraftfahrzeugs angebracht ist und für den Empfang im Meterwellenbereich sowohl im oberen (2a) als auch.im unteren (2b) und im vertikalen (2c) Teil des leitenden Fensterahmens (2) jeweils mindestens eine der Diversityantennen gebildet ist und die Position des Antennenanschlußpunkts (8) durch Anschluß an die langgestreckte Elektrode (6) jeweils so gewählt ist, daß sich eine möglichst große Diversity-Wirkung ergibt. (Fig. 5)

12. Fensterscheibenantenne nach Anspruch 10 und 11
**dadurch gekennzeichnet, daß**
einer der Antennenanschlußpunkte (8) der UKW bzw. TV-Diversityantennen für die Auskopplung von LMK-Empfangssignalen verwendet ist und zur Vermeidung der für LMK schädlichen Belastung durch Anschlußkabel bzw. Eingänge der Eingangsschaltungen zwischen der begrenzt leitfähigen Fläche (4) und dem Antennenanschlußpunkt (8) jeweils eine Kapazität (10) wirksam ist, deren Blindwiderstand im UKW-bzw TV-Bereich hinreichend niederohmig, die Summe der kapazitiven Belastungen im LMK-Bereich jedoch so klein wie möglich ist. (Fig. 5)

13. Fensterscheibenantenne nach Anspruch 12
**dadurch gekennzeichnet, daß**
bei Verwendung in einem relativ schmalen Frequenzbereich (UKW) zur Verkleinerung der Wirkung der notwendigen Kapazität (10) dieser eine Induktivität zur teilweisen Kompensation des kapazitiven Blindwiderstands in Serie geschaltet ist. (Fig. 2 b, c)

14. Fensterscheibenantenne nach Anspruch 12, 13 und 2
**dadurch gekennzeichnet, daß**
bei vorgegebener Elektrodenlänge (5) eine geeignet kleine Elektrodenbreite (9) gewählt ist.

15. Fensterscheibenantenne nach Anspruch 1 bis 14
**dadurch gekennzeichnet, daß**
die Elektrode (6) auf das Glas als Aufdruck angebracht ist.

16. Fensterscheibenantenne nach Anspruch 15
**dadurch gekennzeichnet, daß**
die Induktivität, die Elektrode (6) und die Induktivität auf das Glas als Aufdruck angebracht sind.

17. Fensterscheibenantenne nach Anspruch 1 bis 16
**dadurch gekennzeichnet, daß**
der spezifische Oberflächenwiderstand der begrenzt leitfähigen Fläche (4) zwischen 3 und 20 Ohm beträgt und die begrenzt leitfähigen Fläche (4) zusammen mit einer zusätzlichen. Elektrode (6a) zwischen die beiden Glasscheiben einer Verbundglasfensterscheibe eingebracht ist und diese zusätzlichen Elektrode (6a) im wesentlichen parallel zum Rand der begrenzt leitfähigen Fläche (4) geführt ist und die hochfrequenzmäßige Verbindung der zusätzlichen Elektrode (6a) zur begrenzt leitfähigen Fläche (4) galvanisch gegeben ist und der hochfrequente Anschluß zur zusätzlichen Elektrode (6a) aus dem Glasverbund heraus hochfrequenzmäßig in der Weise erfolgt, daß auf einer der zusätzlichen Elektrode (6a) gegenüberliegenden äußeren Fläche des Glases zur Bildung einer Kapazität eine Elektrode (6), bestehend aus einer im wesentlichen zur zusätzlichen Elektrode (6a) formgleichen leitenden Fläche gebildet ist und diese mit dem Antennenanschlußpunkt (8) verbunden ist (Fig.5b)

18. Fensterscheibenantenne nach Anspruch 18
**dadurch gekennzeichnet, daß**
die hochfrequenzmäßige Verbindung der zusätzlichen Elektrode (6a) zur begrenzt leitfähigen Fläche (4) nicht galvanisch sondern kapazitiv über eine dem Glasverbund beigelegte dünne Kunststoffolie (11) gegeben ist (Fig.5a).

19. Fensterscheibenantenne mit einem Antennenanschlußpunkt (8), deren Hauptelement durch eine für Licht transparente jedoch wärmetransmissionsmindernde und in einem Bereich der Fensterscheibe flächig aufgebrachte begrenzt leitfähige Schicht mit nicht vernachlässigbarem Oberflächenwiderstand gebildet ist und auf der Fensterscheibe eine länglich ausgebildete Elektrode (6) aus hoch leitfähigem Material zum hochfrequenten Anschluß an die durch die Schicht gebildete begrenzt leitende Fläche (4) gebildet ist,
**dadurch gekennzeichnet, daß**
die Elektrode (6) im wesentlichen flächenhaft ausgestaltet und durch ihre Fläche mit der begrenzt leitfähigen Fläche (4) hochfrequent verbunden ist und die Elektrode (6) derart gestaltet ist, daß die Länge der mit der begrenzt leitfähigen Fläche (4) kapazitiv verbundenen Elektrode (6) mindestens so groß gewählt ist, daß der im Bereich von deren Berandung durch den Übergang des Stromes von der Elektrode (6) auf die begrenzt leitfähige Fläche (4) gebildete Verlustbeitrag hinreichend klein ist und die hoch leitfähige Elektrode (6) hochfrequenzmäßig mit dem Antennenanschlußpunkt (8) verbunden ist und
für die Ausbildung mehrerer Antennen für Diversity-Anwendungen im Meter- und Dezimeterwellenbereich mit ein und derselben begrenzt leitfähigen Fläche (4) mehrere voneinander getrennte und am Umfang des leitenden Fensterahmens (2) verteilte Elektroden (6) vorhanden sind mit jeweils einem Antennenanschlußpunkt (8) und einem dazu benachbarten, auf dem leitenden Fensterahmen (2) befindlichen Massepunkt (3). (Fig. 5)

## Claims

1. Window antenna with an antenna connection point (8), the main element of which is formed by a translucent but heat transmission-reducing layer with limited conductivity and non-negligible surface resistance, which is applied over a broad surface in an area of the window, and on the window glass a linear electrode (6) of highly conductive material is formed for high frequency connection to the limited conductance surface (4) formed by the layer, **characterised in that** the electrode (6) is formed essentially flat and is connected high frequency capacitatively through its surface with the limited conductance surface (4), and the electrode (6) is designed such that the length of the electrode (6) connected capacitatively with the limited conductance surface (4) is selected at least so large that the loss contribution formed in the area of its periphery by the transition of current from the electrode (6) to the limited conductance surface (4) is sufficiently small, and the highly conductive electrode (6) is connected at high frequency with the antenna connection point (8) (fig 1a).

2. Window antenna according to claim 1, **characterised in that** the limited conductance surface (4) and the electrode (6) are applied to different surfaces of a dielectrically active layer comprising plastic films and/or glass, and to create a sufficiently low-resistance capacitative connection between the limited conductance surface (4) and the electrode (6), the electrode width (9) is selected sufficiently large (figs 2a, b, c).

3. Window antenna according to claims 1 to 2, **characterised in that** the electrode (6) connected high frequency capacitatively with the limited conductance surface (4) is formed as a linear strip and extends at least over part of the periphery of the limited conductance surface (4) in the vicinity of and along its periphery, and to reduce the loss of the electrode (6) the electrode length (5) is selected sufficiently large.

4. Window antenna according to claims 1 to 3, **characterised in that** the specific surface resistance of the limited conductance surface (4) is between 3 and 20 Ohm and this is inserted together with the electrode (6) between the two panes of a laminated glass window, and the electrode (6) runs essentially parallel to the edge of the limited conductance surface (4), and there is a connection to the electrode (6) from the laminated glass, and the high frequency connection of the electrode (6) to the limited conductance surface (4) is given capacitatively via a thin plastic film (11) provided with the laminated glass.

5. Window antenna according to claims 1 to 4, **characterised in that** the limited conductance surface (4) is inserted between the two glass panes of a laminated glass window and the electrode (6) is applied to one of the two outer glass surfaces of the laminated glass window, and the specific surface resistance of the limited conductance surface (4) is between 3 and 20 Ohm, and the electrode (6) is guided essentially parallel to the edge of the limited conductance surface (4), and the electrode length (5) is selected greater than 5 cm and the electrode width (9) approximately 5 to 10 mm (figs 2a, b, c).

6. Window antenna according to claims 1 to 5, **characterised in that** the window antenna is applied to the window of a motor vehicle and is used to receive radio and television broadcast signals (fig 3).

7. Window antenna according to claim 6, **characterised in that** the motor vehicle has an electrically conductive body and the limited conductance surface (4) covers the window pane over the entire visible area limited by the black printing in the edge area of the window, the strip-like electrode (6) is guided essentially parallel to the visible edge of the black printing and is covered thereby, the electrode width (9) is selected sufficiently large, and the remaining distance from the edge of the limited conductance surface (4) to the conductive window frame (2) is selected as large as possible.

8. Window antenna according to claims 1 to 7, **characterised in that** the specific surface resistance of the limited conductance surface (4) is between 5 and 10 Ohm, and to achieve minimum losses in the VHF frequency band the electrode length (5) is selected as approximately 20 to 30 cm (fig 3).

9. Window antenna according to claim 6 to 7, **characterised in that** particularly in the case of higher surface resistance of the limited conductive surface (4), to achieve minimum losses the electrode (6) is formed as a frame about the entire window opening (fig 4).

10. Window antenna according to claim 6 to 8, **characterised in that** to produce several antennae for diversity applications in the metre and decimetre wavelength ranges with one and the same limited conductance surface (4), several electrodes are provided separated from each other and distributed about the periphery of the conductive window frame (2), each with an antenna connection point (8) and adjacent thereto an earthing point (3) on the conductive window frame (2) (fig 5).

11. Window antenna according to claim 10, **characterised in that** the window antenna is applied to the front windscreen of a motor vehicle and for reception in the metre wavelength range, in each case at. least one of the diversity antennae is formed in the upper (2a) and the lower (2b) and in the vertical (2c) part of the conductive window frame (2), and the position of the antenna connection point (8) is selected by connection to the linear electrode (6) so that the maximum diversity effect is achieved (fig 5).

12. Window antenna according to claim 10 and 11, **characterised in that** one of the antenna connection points (8) of the VHF or TV diversity antennae is used to decouple LMS reception signals, and to avoid the loading detrimental to LMS from connection cables or inputs of the input circuits, between the limited conductance surface (4) and the antenna connection point (8) a capacitance (10) is effective, the reactance of which is of sufficiently low-resistance in the VHF or TV range, but the sum of capacitative loads in the LMS range however is as low as possible (fig 5).

13. Window antenna according to claim 12, **characterised in that** when used in a relatively narrow frequency range (VHF), to reduce the effect of the necessary capacitance (10) thereof an inductance is connected in series for partial compensation of the capacitative reactance (figs 2b, c).

14. Window antenna according to claims 12, 13 and 2, **characterised in that** for a preset electrode length, a suitably small electrode width (9) is selected.

15. Window antenna according to claims 1 to 14, **characterised in that** the electrode (6) is applied to the glass as a print.

16. Window antenna according to claim 15, **characterised in that** the inductance, electrode (6) and inductance are applied to the glass as a print.

17. Window antenna according to claims 1 to 16, **characterised in that** the specific surface resistance of the limited conductance surface (4) is between 3 and 20 Ohm and the limited conductance surface (4) is inserted between the two glass panes of a laminated window glass together with an additional electrode (6a), and this additional electrode (6a) is guided essentially parallel to the edge of the limited conductance surface (4), and the high frequency connection of the additional electrode (6a) to the limited conductance surface (4) is galvanic, and the high frequency connection to the additional electrode (6a) out of the glass laminate takes place high-frequency such that on an outer surface of the glass opposite the additional electrode (6a), to form a capacitance an electrode (6) is formed consisting of a conductive surface essentially of the same shape as the additional electrode (6a) and connected to the antenna connection point (8) (fig 5b).

18. Window antenna according to claim 18, **characterised in that** the high frequency connection of the additional electrode (6a) to the limited conductance surface (4) is not galvanic but capacitative via a thin plastic film (11) provided with the glass laminate (fig 5a).

19. Window antenna with an antenna connection point (8), the main element of which is formed by a translucent but heat transmission-reducing layer with limited conductivity and non-negligible surface resistance, which is applied over a broad surface in an area of the window, and on the window glass a linear electrode (6) of highly conductive material is formed for high frequency connection to the limited conductance surface (4) formed by the layer, **characterised in that** the electrode (6) is formed essentially flat and is connected high frequency capacitatively through its surface with the limited conductance surface (4), and the electrode (6) is designed such that the length of the electrode (6) connected capacitatively with the limited conductance surface (4) is selected at least so large that the loss contribution formed in the area of its periphery by the transition of current from the electrode (6) to the limited conductance surface (4) is sufficiently small, and the highly conductive electrode (6) is connected at high frequency with the antenna connection point (8), and to produce several antennae for diversity applications in the metre and decimetre wavelength ranges with one and the same limited conductance surface (4), several electrodes are provided separated from each other and distributed about the periphery of the conductive window frame (2), each with an antenna connection point (8) and adjacent thereto an earthing point (3) on the conductive window frame (2) (fig 5).

## Revendications

1. Antenne pour vitre de fenêtre avec un point de connexion d'antenne (8) dont l'élément principal est formé par une couche à conductivité limitée ayant une résistance de surface non négligeable, transparente à la lumière mais réduisant la transmission de chaleur et disposée à plat dans une zone de la vitre de fenêtre et par une électrode allongée (6) en matériau fortement conducteur formée sur la vitre de fenêtre sur la surface à conductivité limitée (4) formée par la couche pour une connexion à haute fréquence, **caractérisée en ce que** l'électrode (6) est sensiblement plate et couplée de façon capacitive à haute fréquence par sa surface avec la surface à conductivité limitée (4), et l'électrode (6) est conformée de telle sorte que la longueur de l'électrode (6) en couplage capacitif avec la surface à conductivité limitée (4) soit au moins suffisamment grande pour que la contribution aux pertes produite au niveau de ses bords par le passage du courant de l'électrode (6) sur la surface à conductivité limitée (4) soit suffisamment faible et que l'électrode (6) fortement conductrice communique à haute fréquence avec le point de connexion d'antenne (8). (Figure 1a)

2. Antenne pour vitre de fenêtre selon la revendication 1, **caractérisée en ce que** la surface à conductivité limitée (4) et l'électrode (6) sont appliquées sur des surfaces différentes d'une couche ayant une action diélectrique, composée de feuilles de plastique ou de verre, et la largeur de l'électrode (9) est de taille suffisante pour qu'il se crée un couplage capacitif à impédance suffisamment basse entre la surface à conductivité limitée (4) et l'électrode (6). (Figure 2a,b,c)

3. Antenne pour vitre de fenêtre selon les revendications 1 à 2, **caractérisée en ce que** l'électrode (6) couplée de façon capacitive à haute fréquence avec la surface à conductivité limitée (4) est réalisée sous la forme d'une bande allongée et s'étend sur au moins une partie du bord de la surface à conductivité limitée (4) à proximité et le long du bord de celle-ci et la longueur (5) de l'électrode est suffisante pour empêcher les pertes de l'électrode (6).

4. Antenne pour vitre de fenêtre selon les revendications 1 à 3, **caractérisée en ce que** la résistance spécifique de surface de la surface à conductivité limitée (4) est comprise entre 3 et 20 ohms et celle-ci est intégrée entre les deux vitres d'une fenêtre en verre feuilleté avec l'électrode (6) et l'électrode (6) est sensiblement parallèle au bord de la surface à conductivité limitée (4) et il est prévu une connexion pour l'électrode (6) sortant du verre feuilleté et la connexion à haute fréquence de l'électrode (6) à la surface à conductivité limitée (4) est réalisée de façon capacitive par une fine feuille de plastique (11) ajoutée au verre feuilleté.

5. Antenne pour vitre de fenêtre selon les revendications 1 à 4, **caractérisée en ce que** la surface à conductivité limitée (4) est insérée entre les deux vitres d'une fenêtre en verre feuilleté et l'électrode (6) est appliquée sur l'une des deux surfaces de verre extérieures de la fenêtre en verre feuilleté et la résistance spécifique de surface de la surface à conductivité limitée (4) est comprise entre 3 et 20 ohms et l'électrode (6) est sensiblement parallèle au bord de la surface à conductivité limitée (4) et la longueur (5) de l'électrode est supérieure à 5 cm et la largeur (9) de l'électrode est comprise entre 5 et 10 mm environ. (Figure 2a,b,c)

6. Antenne pour vitre de fenêtre selon les revendications 1 à 5, **caractérisée en ce que** l'antenne pour vitre de fenêtre est appliquée sur la fenêtre d'un véhicule à moteur et est utilisée pour la réception de signaux hertziens de radio et de télévision. (Figure 3)

7. Antenne pour vitre de fenêtre selon la revendication 6, **caractérisée en ce que** le véhicule à moteur possède une carrosserie conductrice électrique et la surface à conductivité limitée (4) couvre la vitre de fenêtre sur toute la zone de visibilité délimitée par l'impression en noir sur le bord de la fenêtre, l'électrode (6) en forme de bande est sensiblement parallèle au bord de visibilité de l'impression en noir et recouverte par celui-ci, la largeur (9) de l'électrode est suffisamment grande et la distance restant entre le bord de la surface à conductivité limitée (4) et le cadre de fenêtre (2) conducteur est aussi grand que possible.

8. Antenne pour vitre de fenêtre selon les revendications 1 à 7, **caractérisée en ce que** la résistance spécifique de surface de la surface à conductivité limitée (4) est comprise entre 5 et 10 ohms et la longueur (5) de l'électrode est de l'ordre de 20 à 30 cm afin d'obtenir des pertes minimales dans la plage de fréquence FM. (Figure 3)

9. Antenne pour vitre de fenêtre selon les revendications 6 à 7, **caractérisée en ce que**, en particulier lorsque la surface à conductivité limitée (4) a une résistance de surface à faible impédance, l'électrode (6) est conçue comme un cadre entourant toute l'ouverture de la fenêtre afin de minimiser les pertes. (Figure 4)

10. Antenne pour vitre de fenêtre selon les revendications 6 à 8, **caractérisée en ce qu'**en vue de construire plusieurs antennes pour des applications de diversité dans les plages d'ondes métriques et décimétriques avec une seule et même surface à conductivité limitée (4), il est prévu plusieurs électrodes (6) séparées les unes des autres et réparties sur la circonférence du cadre de fenêtre conducteur (2) avec pour chacune un point de connexion d'antenne (8) et un point de masse (3) voisin de celui-ci et disposé sur le cadre de fenêtre conducteur (2). (Figure 5)

11. Antenne pour vitre de fenêtre selon la revendication 10, **caractérisée en ce que** l'antenne pour vitre de fenêtre est disposée sur la fenêtre avant d'un véhicule à moteur et au moins une des antennes de diversité est prévue, pour la réception dans la plage d'ondes métriques, dans la partie supérieure (2a) et la partie inférieure (2b) ainsi que dans la partie verticale (2c) du cadre de fenêtre conducteur (2), et la position du point de connexion d'antenne (8) est définie par la connexion à l'électrode (6) allongée de manière à obtenir un effet de diversité maximal. (Figure 5)

12. Antenne pour vitre de fenêtre selon les revendications 10 et 11, **caractérisée en ce que** l'un des points de connexion d'antenne (8) des antennes de diversité FM ou TV est utilisé pour le découplage des signaux de réception GO/MO/PO et pour éviter l'influence nuisible aux ondes GO/MO/PO des câbles de connexion ou entrées des circuits d'entrée, il est prévu entre la surface à conductivité limitée (4) et le point de connexion d'antenne (8) une capacité (10) dont la résistance à vide dans la plage FM ou TV a une impédance suffisamment faible tout en maintenant la somme des influences capacitives dans la plage GO/MO/PO aussi faible que possible. (Figure 5)

13. Antenne pour vitre de fenêtre selon la revendication 12, **caractérisée en ce que** pour une utilisation dans une plage de fréquences relativement étroite (FM), en vue de réduire l'effet de la capacité (10) nécessaire, celle-ci est montée en série avec une inductance afin de compenser au moins partiellement la résistance à vide capacitive. (Figure 2b,c)

14. Antenne pour vitre de fenêtre selon les revendications 12, 13 et 2, **caractérisée en ce que** pour une longueur (5) donnée de l'électrode, une largeur (9) de l'électrode suffisamment petite est choisie.

15. Antenne pour vitre de fenêtre selon les revendications 1 à 14, **caractérisée en ce que** l'électrode (6) est appliquée par sérigraphie sur le verre.

16. Antenne pour vitre de fenêtre selon la revendication 15, **caractérisée en ce que** l'inductance, l'électrode (6) et l'inductance sont appliquées par sérigraphie sur le verre.

17. Antenne pour vitre de fenêtre selon les revendications 1 à 16, **caractérisée en ce que** la résistance de surface spécifique de la surface à conductivité limitée (4) est comprise entre 3 et 20 ohms et la surface à conductivité limitée (4) est insérée entre les deux vitres d'une fenêtre en verre feuilleté avec une électrode supplémentaire (6a) et cette électrode supplémentaire (6a) est sensiblement parallèle au bord de la surface à conductivité limitée (4) et la connexion à haute fréquence entre l'électrode supplémentaire (6a) et la surface à conductivité limitée (4) est galvanique et la connexion à haute fréquence avec l'électrode supplémentaire (6a) hors du verre feuilleté se fait à haute fréquence par le fait qu'il est formé sur une surface extérieure du verre faisant face à l'électrode supplémentaire (6a), pour former une capacité, une électrode (6) composée d'une surface conductrice de forme sensiblement identique à celle de l'électrode supplémentaire (6a) et celle-ci est connectée au point de connexion d'antenne (8). (Figure 5b)

18. Antenne pour vitre de fenêtre selon la revendication 17, **caractérisée en ce que** la connexion à haute fréquence entre l'électrode supplémentaire (6a) et la surface à conductivité limitée (4) n'est pas galvanique mais capacitive et est réalisée par une fine feuille de plastique (11) ajoutée au verre feuilleté. (Figure 5a)

19. Antenne pour vitre de fenêtre avec un point de connexion d'antenne (8) dont l'élément principal est formé par une couche à conductivité limitée ayant une résistance de surface non négligeable, transparente à la lumière mais réduisant la transmission de chaleur et disposée à plat dans une zone de la vitre de fenêtre et une électrode allongée (6) en matériau fortement conducteur est formée sur la vitre de fenêtre sur la surface à conductivité limitée (4) formée par la couche pour une connexion à haute fréquence, **caractérisée en ce que** l'électrode (6) est sensiblement plate et connectée de façon capacitive à haute fréquence par sa surface avec la surface à conductivité limitée (4) et l'électrode (6) est conformée de telle sorte que la longueur de l'électrode (6) en connexion capacitive avec la surface à conductivité limitée (4) soit au moins suffisamment grande pour que la contribution aux pertes formée au niveau de ses bords par le passage du courant de l'électrode (6) à la surface à conductivité limitée (4) soit suffisamment petite et que l'électrode (6) fortement conductrice communique à haute fréquence avec le point de connexion d'antenne (8) et, pour former plusieurs antennes pour des applications de diversité dans les plages d'ondes métriques et décimétriques avec une seule et même surface à conductivité limitée (4), il est prévu plusieurs électrodes (6) séparées les unes des autres et réparties sur la périphérie du cadre de fenêtre conducteur (2) avec chacune un point de connexion d'antenne (8) et un point de masse (3) voisin de celui-ci et disposé sur le cadre de fenêtre conducteur (2). (Figure 5)
